# EUROPEAN PATENT SPECIFICATION

(11) **EP 3 203 190 B1**
(45) Date of publication and mention of the grant of the patent: **22.04.2020**
(21) Application number: 16206299.6
(22) Date of filing: 22.12.2016
(51) Int. Cl.: G01C 25/00, G01P 1/00, G01P 21/00

(54) **INERTIAL MEASUREMENT UNIT**
TRÄGHEITSMESSEINHEIT
UNITÉ DE MESURE INERTIELLE

(30) Priority: 08.02.2016 GB 201602202
(43) Date of publication of application: 09.08.2017
(73) Proprietor: Atlantic Inertial Systems Limited, Plymouth, Devon PL6 6DE (GB)
(72) Inventor: GREGORY, Christopher M., Plymouth, Devon PL6 6DE (GB)
(74) Representative: Dehns

(56) References cited:
- EP-A2- 2 574 879
- WO-A1-2005/103618
- JP-A- 2004 279 324
- JP-A- 2005 172 672
- JP-B2- 3 795 340
- US-A- 5 416 585
- US-A1- 2010 238 450
- US-A1- 2011 241 656
- US-A1- 2015 276 783
- DATABASE WPI Thomson Scientific, London, GB; AN 2014-B74397 XP002770968, & CN 103 412 592 A (BEIJING AEROSPACE) 27 November 2013 (2013-11-27)

## Description

### Technical Field

The present disclosure relates to an inertial measurement unit (IMU) and to methods of compensating for thermal gradients in an inertial measurement unit. In particular, but not exclusively, examples of the present disclosure relate to IMUs using a thermal ramp compensation scheme.

### Background

Typically an inertial measurement unit (IMU) comprises multiple inertial sensors, such as accelerometers and/or gyroscopes, for measuring one or more axes of acceleration and/or angular rate. For example, an IMU providing a six degrees of freedom sensing system may comprise three orthogonal accelerometer axes and three gyroscopes. Compact, high performance IMUs usually comprise high grade MEMS (micro-electromechanical systems) gyroscopes and accelerometers integrated into a package that has dimensions of only around 50 mm. Such IMUs are expected to operate across a temperature range of -40 °C to +85 °C.

Each sensing axis in a multiple sensing system comprises: the inertial sensor itself, such as a MEMS ring resonator gyroscope; the control electronics used to drive the sensor, such as an ASIC or analogue / digital loop electronics comprising discrete components; and a temperature sensor, such as a thermistor or an output from the sensor itself e.g. gyroscope resonant frequency. During conventional calibration and test, an inertial system is exposed to a range of temperatures in a stable thermal environment and parametric errors, such as bias error and scale factor error, can be observed in this stable thermal state. Compensation can thus be applied to remove such errors during operation and test.

The inertial sensors in IMUs are generally calibrated over their operating temperature range, but typically suffer from warm-up performance drift errors and hysteresis due to thermal gradients. Temperature gradients in the sensing structure can cause stress / strain characteristics that influence performance parameters, such as bias and scale factor. Temperature differences between the sensing elements, control electronics and temperature sensing elements may be small or consistent during calibration and test, providing minimal errors to be observed when certain thermal environmental conditions and start-up routines are met. However, during operation in unstable thermal environments or rapid start-up scenarios with significant self-heating effects, discrepancies in temperatures of components will cause sub-optimal thermal compensation and associated parametric errors in inertial sensor performance. Such errors are often characterised as 'warm-up drift' for gyroscope or accelerometer bias shift from switch on to steady state thermal operation or 'hysteresis' of output when thermally ramped in a thermal chamber or higher level operating system.

There remains a need for IMUs that can operate reliably even in unstable thermal environments where thermal gradients can affect performance parameters, such as bias and scale factor.

US 5416585 presents an invention for providing a correction to a fibre optic gyroscope drift rate error due to temperatures effects based on either the temperature difference between the gyroscope housing and the sensor spool, or the rate of change of spool temperature.

EP 2574879 describes a system and method for providing thermal gradient compensation for a ring laser gyroscope including obtaining a laser block temperature measurement, obtaining a temperature gradient measurement for at least one gradient line across a portion of the laser block sensor, and calculating a rate bias error.

US 20150276783 describes a positioning device with an inertial sensor and a temperature sensor configured to provide an input temperature variation of the inertial sensor in a time interval.

### Summary

According to a first aspect of the present disclosure there is provided an inertial measurement unit as defined by claim 1.

Thus according to this disclosure the instantaneous output from multiple (e.g. primary and one or more secondary) temperature sensors can be observed to infer a spatial thermal gradient between them. This approach is ideally coupled with an understanding of the IMU system design, for example through thermal modelling, to associate the observed temperatures with a deeper understanding of how this data links to inferred temperatures in all parts of the system.

The at least one inertial sensor comprises a MEMS-based inertial sensor.

The primary temperature sensor may be a physically separate temperature sensor (e.g. thermistor) located next to the inertial sensor, or the primary temperature sensor may be formed by the inertial sensor itself. In particular, it may be possible to measure temperature by observing a physical feature of the inertial sensor. For example, an inertial sensor comprising a vibrating structure gyroscope has an inherent ability to output a temperature measurement based on changes in the resonance frequency. Thus in some examples the inertial sensor comprises a vibrating structure gyroscope driven to resonance and the primary temperature sensor is arranged to output a temperature measurement based on the resonance frequency. Such a vibrating structure gyroscope may take the form of a ring resonator gyroscope or a tuning fork gyroscope.

In some other examples the inertial sensor comprises an accelerometer and the primary temperature sensor is arranged to measure temperature at, or near, the spatial location of the accelerometer. For example, the primary temperature sensor may comprise a thermistor located next to the accelerometer.

An inertial measurement unit comprising multiple inertial sensors may comprise at least one vibrating structure gyroscope and at least one accelerometer. Each of the inertial sensors may have its own spatially associated primary temperature sensor.

To fully realise the benefits of determining a spatial temperature gradient output, an appropriate configuration of secondary temperature sensors may be incorporated into the IMU design alongside a calibration process that enables sufficient observation of thermal gradients (both positive and negative) over the full operating temperature range. The plurality of secondary temperature sensors are spatially located in suitable locations within the sensor structure, electronics, and other locations that provide an insight into the thermal gradients observed.

The at least one inertial sensor comprises a MEMS substrate and at least one secondary temperature sensor is located on the MEMS substrate. For example, a secondary temperature sensor may comprise a thermistor in the form of metallised tracking on a surface of the MEMS substrate. Such an arrangement may enable temperature measurement through observation of resistivity changes with temperature.

In addition, the at least one inertial sensor comprises an integrated circuit and at least one secondary temperature sensor forms part of the integrated circuit (for example, a secondary temperature sensor may comprise a thermistor in or alongside electronic components such as pick off amps or forming part of an ASIC (application-specific integrated circuit)), or the processor is located on a printed circuit board and at least one secondary temperature sensor is located on the same printed circuit board, or the inertial measurement unit may comprise an electrical connector for a host system, wherein at least one secondary temperature sensor is located at or on the electrical connector (for example, a secondary temperature sensor may comprise a thermistor arranged in a pin connector to the host system).

In an inertial measurement unit comprising multiple inertial sensors, each of the inertial sensors may have its own set of associated secondary temperature sensors. Or at least some secondary temperature sensors may output a temperature measurement that is used to determine a spatial temperature gradient output for more than one inertial sensor.

According to a second aspect of the present disclosure there is provided a method of compensating for thermal gradients in an inertial measurement unit as defined by claim 4.

### Brief description of drawings

One or more non-limiting examples will now be described, with reference to the accompanying drawings, in which:
Figure 1 provides a schematic block diagram for a temporal thermal gradient compensation scheme in an IMU;
Figure 2 shows the variation of inertial sensor temperature with time in an exemplary IMU;
Figure 3 shows the differentiated temperature measurement from a primary temperature sensor spatially associated with the inertial sensor;
Figure 4 shows smoothing of the temporal temperature gradient output;
Figure 5 provides a schematic block diagram for a spatial thermal gradient compensation scheme in an IMU; and
Figures 6a-6c show examples of some spatial locations for the secondary temperature sensors in an IMU.

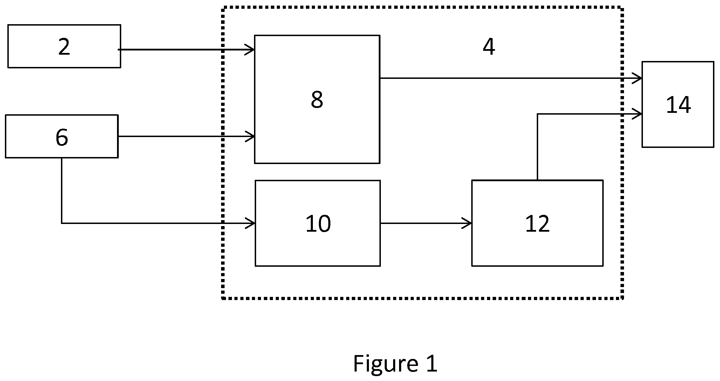

There is seen in Figure 1 an inertial sensor 2 arranged to output an inertial measurement to a processor 4 in an IMU. A primary temperature sensor 6 spatially associated with the inertial sensor 2 is arranged to output a temperature measurement to the processor 4. As illustrated by block 8, the inertial measurement and the temperature measurement may be used by a conventional parametric compensation scheme to determine parametric errors during operation based on stable calibration and test conditions. According to examples of the present disclosure, the processor 4 carries out additional steps using the temperature measurement output by the primary temperature sensor 6. In block 10, the temperature measurement is differentiated with respect to time so as to determine a temporal temperature gradient output. This temporal temperature gradient output is fed to block 12 where a "thermal ramp" parametric compensation scheme additionally determines a compensation for the inertial measurement, or an associated parametric error, based on the temporal temperature gradient output. Block 10 may optionally include filtering and/or smoothing of the differentiated temperature measurement. The processor 4 then provides a compensated parametric output at block 14.

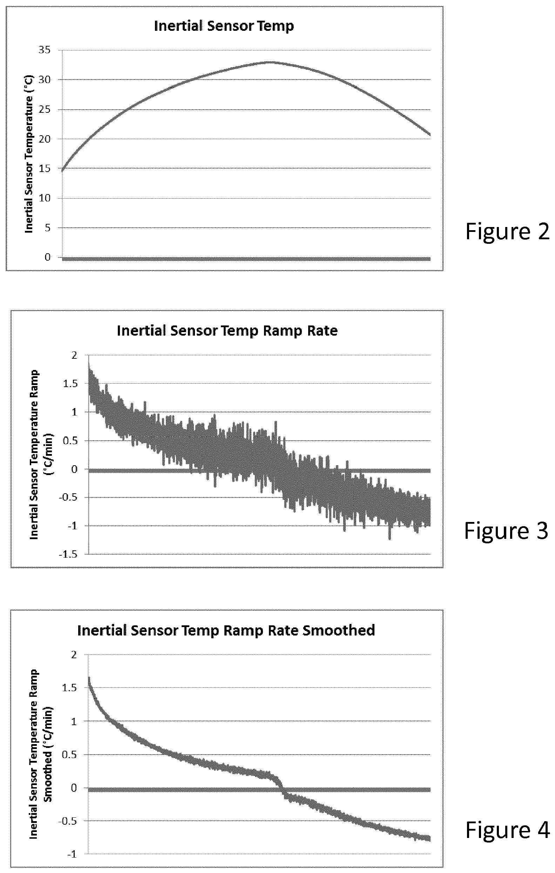

Figure 2 shows how the temperature of the inertial sensor 2 may vary in time due to thermal gradient effects in the IMU. Figures 3 and 4 provide examples of the differentiated temperature measurement output by block 10, either as a raw measurement of temporal temperature gradient (Fig. 3) or after smoothing e.g. using a moving average filter (Fig. 4).

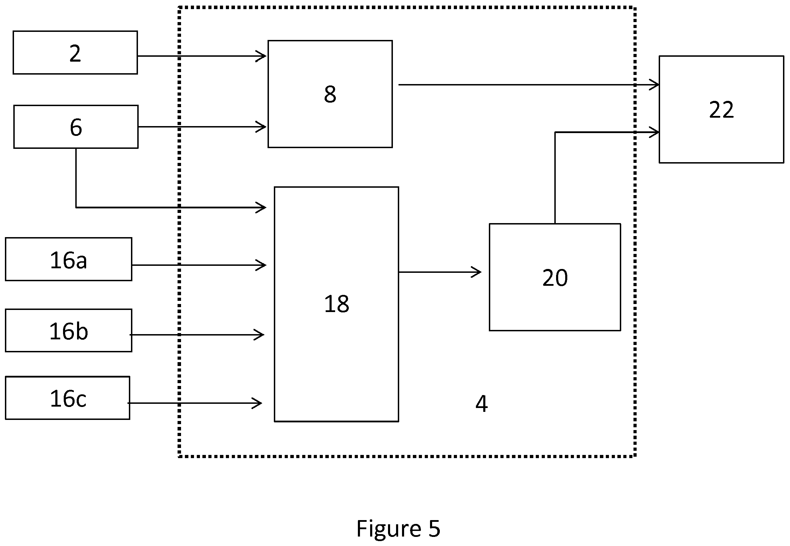

There is seen in Figure 5 an inertial sensor 2 arranged to output an inertial measurement to a processor 4 in an IMU. A primary temperature sensor 6 spatially associated with the inertial sensor 2 is arranged to output a temperature measurement to the processor 4. As illustrated by block 8, the inertial measurement and the temperature measurement may be used by a conventional parametric compensation scheme to determine parametric errors during operation based on stable calibration and test conditions. According to examples of the present disclosure, the IMU further comprises secondary temperature sensors 16a, 16b, 16c each having a different spatial location to the primary temperature sensor 6, and ideally different spatial locations to one another. Each of the secondary temperature sensors 16a, 16b, 16c is arranged to output a different temperature measurement to block 18, where the processor 4 determines a spatial temperature gradient output. Block 18 may optionally include filtering of the different temperature measurements. At block 20 the processor 4 runs a "thermal ramp" parametric compensation scheme to additionally determine a compensation for the inertial measurement, or an associated parametric error, based on the spatial temperature gradient output. The processor 4 then provides a compensated parametric output at block 22.

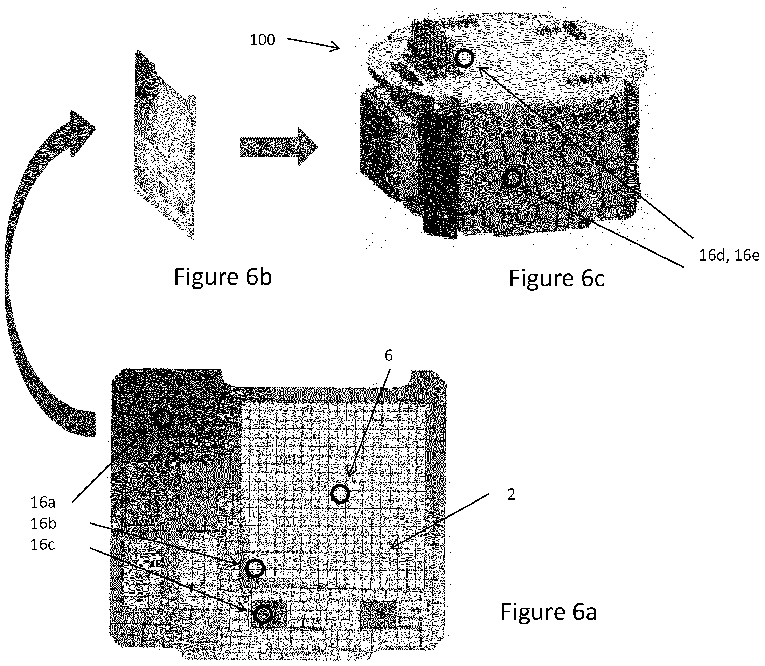

Figures 6a to 6c illustrate an inertial sensor 2 located on one side of an inertial measurement unit (IMU) 100. The inertial sensor 2, which may be a MEMS-based vibrating structure gyroscope or an accelerometer, comprises a primary temperature sensor 6 having the same spatial location. In addition to the primary temperature sensor 6, three secondary temperature sensors 16a, 16b, 16c are positioned at various different spatial locations around the inertial sensor 2. For example, the secondary temperature sensors 16a, 16b, 16c may be placed on the PCB to which the inertial sensor 2 is mounted. As seen from Figure 6c, further secondary temperature sensors 16d, 16e may be positioned in other spatial locations on other sides of the IMU. These locations will typically be chosen on known thermal pathways that provide greatest assistance in observing the thermal gradients being applied to the IMU during operation e.g. in an unstable environment.

It will be appreciated that the two thermal ramp compensation schemes seen in Figures 1 and 5, respectively, may of course be combined in a single processor 4.

## Claims

1. An inertial measurement unit comprising at least one MEMS-based inertial sensor (2) that is arranged to output an inertial measurement, a primary temperature sensor (6) spatially associated with each MEMS-based inertial sensor, the primary temperature sensor being a physically separate temperature sensor located next to each MEMS-based inertial sensor or formed by each MEMS-based inertial sensor itself, and a plurality of secondary temperature sensors (16a, 16b, 16c) that each has a different spatial location to the primary temperature sensor and a different spatial location to one another around each MEMS-based inertial sensor, wherein each of the primary and secondary temperature sensors is arranged to output a different temperature measurement, and comprising a processor (4) arranged to process the different temperature measurements so as to determine a spatial temperature gradient output, wherein the processor is further arranged to determine a compensation for the inertial measurement, or an associated parametric error, based on the spatial temperature gradient output;
**characterised in that** the at least one MEMS-based inertial sensor comprises a MEMS substrate and at least one secondary temperature sensor is located on the MEMS substrate; and wherein:
the at least one inertial sensor comprises an integrated circuit and at least one secondary temperature sensor forms part of the integrated circuit; or
the processor is located on a printed circuit board and at least one secondary temperature sensor is located on the same printed circuit board; or
at least one secondary temperature sensor is located at or on an electrical connector for a host system .

2. The inertial measurement unit of claim 1, wherein the at least one MEMS-based inertial sensor (2) comprises a vibrating structure gyroscope driven to resonance and the primary temperature sensor (6) is arranged to output a temperature measurement based on the resonance frequency.

3. The inertial measurement unit of any preceding claim, wherein the at least one MEMS-based inertial sensor (2) comprises an accelerometer and the primary temperature sensor (6) is arranged to measure temperature at, or near, the spatial location of the accelerometer.

4. A method of compensating for thermal gradients in a MEMS-based inertial measurement unit, comprising:
receiving an inertial measurement output by at least one MEMS-based inertial sensor (2);
receiving a temperature measurement output by a primary temperature sensor (6) spatially associated with each MEMS-based inertial sensor, the primary temperature sensor being a physically separate temperature sensor located next to each MEMS-based inertial sensor or formed by each MEMS-based inertial sensor itself;
receiving a different temperature measurement output by a plurality of secondary temperature sensors (16a, 16b, 16c) that each has a different spatial location to the primary temperature sensor and a different spatial location to one another around each MEMS-based inertial sensor;
processing the different temperature measurements so as to determine a spatial temperature gradient output; and
determining a compensation for the inertial measurement, or an associated parametric error, based on the spatial temperature gradient output;
wherein the at least one MEMS-based inertial sensor comprises a MEMS substrate and at least one secondary temperature sensor is located on the MEMS substrate; and wherein:
the at least one MEMS-based inertial sensor comprises an integrated circuit and at least one secondary temperature sensor forms part of the integrated circuit; or
a processor (4) is located on a printed circuit board and at least one secondary temperature sensor is located on the same printed circuit board; or
at least one secondary temperature sensor is located at or on an electrical connector for a host system.

## Patentansprüche

1. Trägheitsmesseinheit, die mindestens einen MEMS-basierten Trägheitssensor (2), der angeordnet ist, um eine Trägheitsmessung auszugeben, einen primären Temperatursensor (6), der räumlich mit jedem MEMS-basierten Trägheitssensor assoziiert ist, wobei der primäre Temperatursensor ein physisch getrennter Temperatursensor ist, der sich neben jedem MEMS-basierten Trägheitssensor befindet oder durch jeden MEMS-basierten Trägheitssensor selbst gebildet ist, und eine Vielzahl von sekundären Temperatursensoren (16a, 16b, 16c), die jeweils eine andere räumliche Position zu dem primären Temperatursensor und eine andere räumliche Position zueinander um jeden MEMS-basierten Trägheitssensor aufweisen, umfasst, wobei jeder des ersten Temperatursensors und der zweiten Temperatursensoren angeordnet ist, um eine unterschiedliche Temperaturmessung auszugeben, und die einen Prozessor (4) umfasst, der angeordnet ist, um die unterschiedlichen Temperaturmessungen zu verarbeiten, um eine Ausgabe eines räumlichen Temperaturgradienten zu bestimmen, wobei der Prozessor ferner angeordnet ist, um eine Kompensation der Trägheitsmessung oder eines assoziierten parametrischen Fehlers auf Grundlage der Ausgabe des räumlichen Temperaturgradienten zu bestimmen;
**dadurch gekennzeichnet, dass** der mindestens eine MEMS-basierte Trägheitssensor ein MEMS-Substrat umfasst und sich mindestens ein sekundärer Temperatursensor auf dem MEMS-Substrat befindet; und wobei:
der mindestens eine Trägheitssensor eine integrierte Schaltung umfasst und mindestens ein sekundärer Temperatursensor einen Teil der integrierten Schaltung bildet; oder
sich der Prozessor auf einer gedruckten Leiterplatte befindet und sich mindestens ein sekundärer Temperatursensor auf der gleichen gedruckten Leiterplatte befindet; oder
sich mindestens ein sekundärer Temperatursensor an oder auf einem elektrischen Verbinder für ein Host-System befindet.

2. Trägheitsmesseinheit nach Anspruch 1, wobei der mindestens eine MEMS-basierte Trägheitssensor (2) ein Vibrationsstrukturgyroskop umfasst, das zur Resonanz angeregt wird, und wobei der primäre Temperatursensor (6) angeordnet ist, um eine Temperaturmessung auf Grundlage der Resonanzfrequenz auszugeben.

3. Trägheitsmesseinheit nach einem der vorstehenden Ansprüche, wobei der mindestens eine MEMS-basierte Trägheitssensor (2) einen Beschleunigungsmesser umfasst und der primäre Temperatursensor (6) angeordnet ist, um die Temperatur an oder in der Nähe der räumlichen Position des Beschleunigungsmessers zu messen.

4. Verfahren zum Kompensieren von thermischen Gradienten in einer MEMS-basierten Trägheitsmesseinheit, das Folgendes umfasst:
Empfangen einer Trägheitsmessung, die durch mindestens einen MEMS-basierten Trägheitssensor (2) ausgegeben wird;
Empfangen einer Temperaturmessung, die durch einen primären Temperatursensor (6) ausgegeben wird, der räumlich mit jedem MEMS-basierten Trägheitssensor assoziiert ist, wobei der primäre Temperatursensor ein physisch getrennter Temperatursensor ist, der sich neben jedem MEMS-basierten Trägheitssensor befindet oder durch jeden MEMS-basierten Trägheitssensor selbst gebildet ist;
Empfangen einer unterschiedlichen Temperaturmessung, die durch eine Vielzahl von sekundären Temperatursensoren (16a, 16b, 16c) ausgegeben wird, die jeweils eine andere räumliche Position zu dem primären Temperatursensor und eine andere räumliche Position zueinander um jeden MEMS-basierten Trägheitssensor aufweisen;
Verarbeiten der unterschiedlichen Temperaturmessungen, um eine Ausgabe eines räumlichen Temperaturgradienten zu bestimmen; und
Bestimmen einer Kompensation der Trägheitsmessung oder eines assoziierten parametrischen Fehlers auf Grundlage der Ausgabe des räumlichen Temperaturgradienten;
wobei der mindestens eine MEMS-basierte Trägheitssensor ein MEMS-Substrat umfasst und sich mindestens ein sekundärer Temperatursensor auf dem MEMS-Substrat befindet; und wobei:
der mindestens eine MEMS-basierte Trägheitssensor eine integrierte Schaltung umfasst und mindestens ein sekundärer Temperatursensor einen Teil der integrierten Schaltung bildet; oder
sich der Prozessor (4) auf einer gedruckten Leiterplatte befindet und sich mindestens ein sekundärer Temperatursensor auf der gleichen gedruckten Leiterplatte befindet; oder
sich mindestens ein sekundärer Temperatursensor an oder auf einem elektrischen Verbinder für ein Host-System befindet.

## Revendications

1. Unité de mesure inertielle comprenant au moins un capteur inertiel basé sur un MEMS (2) qui est conçu pour produire une mesure inertielle, un capteur de température primaire (6) associé spatialement à chaque capteur inertiel basé sur un MEMS, le capteur de température primaire étant un capteur de température physiquement séparé situé à côté de chaque capteur inertiel basé sur un MEMS ou formé par chaque capteur inertiel basé sur un MEMS lui-même, et une pluralité de capteurs de température secondaires (16a, 16b, 16c) qui ont chacun un emplacement spatial différent du capteur de température primaire et un emplacement spatial différent les uns des autres autour de chaque capteur inertiel basé sur un MEMS, dans laquelle chacun des capteurs de température primaire et secondaires est conçu pour produire une mesure de température différente, et comprenant un processeur (4) conçu pour traiter les différentes mesures de température afin de déterminer une sortie de gradient de température spatiale, dans laquelle le processeur est en outre conçu pour déterminer une compensation pour la mesure inertielle ou une erreur paramétrique associée, sur la base de la sortie de gradient de température spatiale ;
**caractérisée en ce que** l'au moins un capteur inertiel basé sur un MEMS comprend un substrat MEMS et au moins un capteur de température secondaire est situé sur le substrat MEMS ; et dans laquelle :
l'au moins un capteur inertiel comprend un circuit intégré et au moins un capteur de température secondaire fait partie du circuit intégré ; ou
le processeur est situé sur une carte de circuit imprimé et au moins un capteur de température secondaire est situé sur la même carte de circuit imprimé ; ou
au moins un capteur de température secondaire est situé au niveau d'un connecteur électrique ou sur celui-ci pour un système hôte.

2. Unité de mesure inertielle selon la revendication 1, dans laquelle l'au moins un capteur inertiel basé sur un MEMS (2) comprend un gyroscope à structure vibrante entraîné par résonance et le capteur de température primaire (6) est conçu pour produire une mesure de température basée sur la fréquence de résonance.

3. Unité de mesure inertielle selon une quelconque revendication précédente, dans laquelle l'au moins un capteur inertiel basé sur un MEMS (2) comprend un accéléromètre et le capteur de température primaire (6) est conçu pour mesurer la température à l'emplacement spatial de l'accéléromètre ou à proximité de celui-ci.

4. Procédé de compensation de gradients thermiques dans une unité de mesure inertielle basée sur un MEMS, comprenant :
la réception d'une sortie de mesure inertielle par au moins un capteur inertiel basé sur un MEMS (2) ;
la réception d'une mesure de température délivrée par un capteur de température primaire (6) associé spatialement à chaque capteur inertiel basé sur un MEMS, le capteur de température primaire étant un capteur de température physiquement séparé situé à côté de chaque capteur inertiel basé sur un MEMS ou formé par chaque capteur inertiel basé sur un MEMS lui-même ;
la réception d'une mesure de température différente délivrée par une pluralité de capteurs de température secondaires (16a, 16b, 16c) qui ont chacun un emplacement spatial différent du capteur de température primaire et un emplacement spatial différent les uns des autres autour de chaque capteur inertiel basé sur un MEMS ;
le traitement des différentes mesures de température afin de déterminer une sortie de gradient de température spatiale ; et
la détermination d'une compensation pour la mesure inertielle, ou d'une erreur paramétrique associée, sur la base de la sortie de gradient de température spatiale ;
dans lequel l'au moins un capteur inertiel basé sur un MEMS comprend un substrat MEMS et au moins un capteur de température secondaire est situé sur le substrat MEMS ; et dans lequel :
l'au moins un capteur inertiel basé sur un MEMS comprend un circuit intégré et au moins un capteur de température secondaire fait partie du circuit intégré ; ou
un processeur (4) est situé sur une carte de circuit imprimé et au moins un capteur de température secondaire est situé sur la même carte de circuit imprimé ; ou
au moins un capteur de température secondaire est situé au niveau d'un connecteur électrique ou sur celui-ci pour un système hôte.
